## Europäisches Patentamt

## European Patent Office

## Office européen des brevets

(11) Veröffentlichungsnummer: **0 103 232**
A2

(12) # EUROPÄISCHE PATENTANMELDUNG

(21) Anmeldenummer: **83108534.5**

(51) Int. Cl.³: **H 04 N 9/09**

(22) Anmeldetag: **30.08.83**

(30) Priorität: **04.09.82 DE 3232920**

(43) Veröffentlichungstag der Anmeldung: **21.03.84**
Patentblatt 84/12

(84) Benannte Vertragsstaaten: **DE FR GB NL**

(71) Anmelder: **ROBERT BOSCH GMBH,
Robert-Bosch-Strasse 7 Postfach 429, D-6100 Darmstadt
(DE)**

(72) Erfinder: **Zettl, Herbert, Wolfkehlstrasse 28,
D-6081 Erfelden (DE)**
Erfinder: **Kalhöfer, Reinhard, Dr.-Ing., Schulgasse 26,
D-6101 Rossdorf 1 (DE)**

(74) Vertreter: **Gornott, Dietmar, Dipl.-Ing., c/o Robert-Bosch
GmbH Postfach 429 Robert-Bosch-Strasse 7,
D-6100 Darmstadt (DE)**

(54) **Verfahren zur Korrektur objektivabhängiger Linearitäts- und Deckungsfehler.**

(57) Es wird ein Verfahren zur Korrektur objektivabhängiger Linearitäts- und Deckungsfehler bei einer Farbfernsehkamera vorgeschlagen. Hierbei werden entsprechend der Objektiveinstellung repräsentative Signale abgeleitet, digitalisiert und bilden die Adresse für einen Korrekturwertspeicher, der für jede Objektiveinstellung Korrekturwerte abgibt, die digital/analog gewandelt und als Korrektursignal den Horizontal- und Vertikal-Ablenksignalen wenigstens einer Aufnahmeröhre zugeführt werden.

EP 0 103 232 A2

Rl.-Nr. 2043/82
3.9.1982 FE/PLI/Rz/Kn

ROBERT BOSCH GMBH, 7000 Stuttgart 1

Verfahren zur Korrektur objektivabhängiger Linearitäts- und Deckungsfehler

Stand der Technik

Die Erfindung geht aus von einem Verfahren zur Korrektur objektivabhängiger Linearitäts- und Deckungsfehler bei einer Farbfernsehkamera nach der Gattung des Hauptanspruchs.

Da die Eigenschaften der Objektive farbabhängig sind, wirken sich die Einstellungen, beispielsweise von Brennweite, Blende und Entfernung, unterschiedlich für verschiedene Farben aus, was zu Deckungs- und Linearitätsfehlern führen kann. Aus der DE-OS 23 42 916 ist schon ein Verfahren und eine Vorrichtung zum Kompensieren der Fehlüberdeckung in einem

- 2 -

Vielkanal-Fernsehsystem bekannt, wobei jedoch der Zusammenhang zwischen Objektiveinstellung und Korrekturgröße entweder nur linear oder durch eine feste Beziehung nichtlinear sein kann, wodurch die Korrekturmöglichkeiten
eingeschränkt und größere Restfehler möglich sind.
Außerdem muß bei jedem Objektivwechsel die Vorrichtung zum Kompensieren der Fehlüberdeckung jeweils
dem neuen Objektiv angepaßt, das heißt abgeglichen
werden.

Vorteile der Erfindung

Das erfindungsgemäße Verfahren mit den kennzeichnenden Merkmalen des Hauptanspruchs hat demgegenüber
den Vorteil, daß durch die digitale Speicherung beliebige Zusammenhänge zwischen Objektiveinstellung
und Korrekturgröße eingestellt werden können. Außerdem ist bei einem Objektivwechsel lediglich der die
charakteristischen Daten des auszuwechselnden Objektivs enthaltende Digitalspeicher gleichzeitig
durch einen anderen, die charakteristischen Daten
des einzusetzenden Objektivs enthaltenden Digitalspeicher zu ersetzen.

Durch die in den Unteransprüchen aufgeführten Maßnahmen sind vorteilhafte Weiterbildungen und Verbesserungen des im Hauptanspruch angegebenen Verfahrens möglich.

Zeichnung

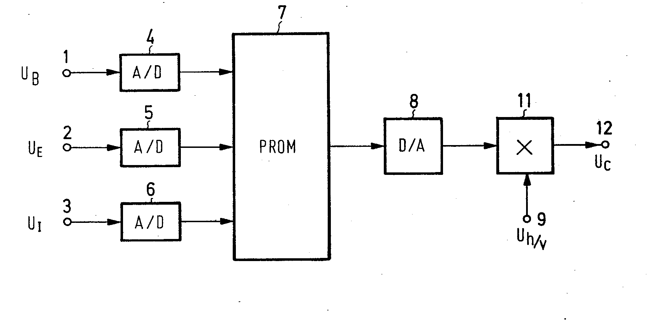

Ein Ausführungsbeispiel zur Durchführung des erfindungsgemäßen Verfahren ist in der Zeichnung

Rl.-Nr. 2043/82          - 3 -

dargestellt und in der nachfolgenden Beschreibung
näher erläutert.


Beschreibung des Ausführungsbeispiels

In der Figur ist eine Schaltung zur Verarbeitung der
von einem Kameraobjektiv abgeleiteten, die Objektiveinstellung charakterisierenden Signale für einen
Farbkanal und eine Korrekturfunktion einer Farbfernsehkamera dargestellt.

Von einem in der Figur nicht dargestellten Zoom-Objektiv werden entsprechend der jeweiligen Einstellung
der Objektivparameter, z. B. von Brennweite bzw. Entfernung bzw. Blende die Signalspannungen $U_B$ bzw. $U_E$ bzw.
$U_I$ in an sich bekannter Weise abgeleitet und über je
eine Eingangsklemme 1 bzw. 2 bzw. 3 je einem Analog/
Digital-Wandler 4 bzw. 5 bzw. 6 zugeführt. In den
Wandlern 4 bis 6 werden die analogen Signalspannungen
in entsprechende Digitalsignale umgewandelt, welche
die Adresse eines Digitalspeichers (PROM) 7 bilden.
Dieser Speicher 7 enthält für jede mögliche Objektiveinstellung einen bestimmten Korrekturwert, der nach
Digital/Analog-Wandlung in einem Digital/Analog-Wandler 8 als analoge Korrekturgröße abgenommen werden
kann. Die jeweilige Korrekturgröße wird nun einer an
Klemme 9 einer Multiplizierstufe 11 anliegenden, von
der Horizontal- bzw. der Vertikal-Frequenz abhängigen
Spannung $U_{h/v}$ zugemischt. An der Ausgangsklemme 12
ist schließlich die Korrekturspannung $U_c$ zum Korrigieren der Linearitäts- und Deckungsfehler der horizontal- bzw. vertikalfrequenten Ablenksignale abnehmbar.

- 4 -

Bei einem späteren Objektivwechsel braucht somit nur noch der zu dem jeweiligen Objektiv zugehörige Digitalspeicher 7 ausgewechselt zu werden, ohne daß weitere Abgleicharbeiten notwendig sind. Der Digitalspeicher 7 wird hierbei für ein bestimmtes Objektiv bei der Fertigung der Kamera bereits fest programmiert.

Eine andere Möglichkeit besteht darin, daß anstelle des fest programmierten Digitalspeichers (PROM) 7 ein Schreib-Lese-Speicher (RAM) eingesetzt wird, dessen Daten bei einem Kamera-Abgleich eingestellt werden können. Hierzu werden vor Beginn des eigentlichen Aufnahmebetriebes der Farbfernsehkamera mit einem bestimmten Aufnahmeobjektiv verschiedene Einstellungen zumindest eines Parameters dieses Objektivs für die Speicherung dieser davon abgeleiteten Signalwerte vorgenommen.

Rl.-Nr. 2043/82
3.9.1982 FE/PLI/Rz/Kn

0103232

ROBERT BOSCH GMBH, 7000 Stuttgart 1

Ansprüche

1. Verfahren zur Korrektur objektivabhängiger Linearitäts- und Deckungsfehler bei einer Farbfernsehkamera, wobei entsprechend der Objektiveinstellung repräsentative Signale abgeleitet und zur Korrektur der Ablenksignale mindestens einer Aufnahmeröhre benutzt werden, dadurch gekennzeichnet, daß die von den Objektiveinstellungen abgeleiteten Signale wenigstens eines Parameters eines Objektivs digitalisiert und zur Auswahl von digital gespeicherten Korrekturwerten benutzt werden, und daß die Korrekturwerte digital/analog in Korrekturgrößen gewandelt werden, welche die horizontalen und vertikalen Ablenksignale wenigstens einer Aufnahmeröhre beeinflussen.

2. Verfahren nach Anspruch 1, dadurch gekennzeichnet, daß die Korrekturgrößen zur statischen Korrektur den horizontalen und vertikalen Ablenksignalen additiv zugesetzt werden.

3. Verfahren nach Anspruch 1, dadurch gekennzeichnet, daß die Korrekturgrößen zur dynamischen Korrektur mit zeitabhängigen Signalen multipliziert und die so erzeugte Korrekturspannungen den horizontalen und vertikalen Ablenksignalen zugeführt werden.

- 2 -

4. Verfahren nach Anspruch 1, dadurch gekennzeichnet, daß die digital gespeicherten Korrekturwerte bei einem Abgleich der Kamera neu ermittelt und eingestellt werden.